# EUROPEAN PATENT APPLICATION

(11) **EP 2 800 437 A1**
(43) Date of publication of application: **05.11.2014**
(21) Application number: 13166373.4
(22) Date of filing: 03.05.2013
(51) Int. Cl.: H04W 72/08, H04B 17/00, H04L 5/00, H04B 7/02, H04W 24/10

(54) **Out-of-group interference measurement in wireless communication systems**

(71) Applicant: FUJITSU LIMITED, Kawasaki-shi, Kanagawa 211-8588 (JP)
(72) Inventor: Fang, Yiwei, High Wycombe HP11 1GD (GB); Moulsley, Tim, Caterham, Surrey CXR3 5EE (GB)
(74) Representative: Stebbing, Timothy Charles

(57) **Abstract**

A method for downlink coordination of Channel State Information - Reference Symbol, CSI-RS, patterns among the several cells and/or eNodeBs operating in a coordinated group, as well as the corresponding measurement schemes on these coordinated CSI-RS patterns. This coordination enables a UE to measure the interference arising from cells outside of the cooperating group, without being disturbed by the transmissions within the group, even under the condition where the time synchronization among the cells/eNodeBs is not ideal. This is enabled by configuring an additional muted data resource element (RE) adjacent to the configured muted CSI-RSs. Individual measurement can then be carried out by a terminal on these muted REs. By combining these results and possibly discarding unwanted ones, a clean measurement of out of group interference can be extracted, while maintaining tolerance to a certain degree of time difference among the cells/eNodeBs.

## Description

### Field of the Invention

The present invention relates to wireless communication systems, for example systems based on the 3GPP Long Term Evolution (LTE) and LTE-Advanced (LTE-A) groups of standards, as well as IEEE 802.16 WiMAX systems, which may allow coordinated downlink transmission from at least one cell in a co-operating group of cells, to a given mobile terminal.

### Background of the Invention

Wireless communication systems are widely known in which base stations (BSs) communicate with user equipments (UEs) (also called terminals, subscriber or mobile stations) within range of the BSs.

The geographical area covered by a base station is generally referred to as a cell, and conventionally many BSs are provided in appropriate locations so as to form a network covering a wide geographical area more or less seamlessly with adjacent and/or overlapping cells, also called "macro cells" below. In more advanced systems, the concept of a cell can also be used in a different way: for example to define a set of radio resources (such as a given bandwidth around a carrier centre frequency), with an associated identity which may be used to distinguish one cell from another. The cell identity can be used for example in determining some of the transmission properties of communication channels associated with the cell, such as using scrambling codes, spreading codes and hopping sequences. A cell may also be associated with one or more reference signals (see below), which are intended to provide amplitude and/or phase reference(s) for receiving one or more communication channels associated with the cell. Therefore, it is possible to refer to communication channels associated with a cell being transmitted from or by the cell (in the downlink), or transmitted to a cell (in the uplink), even if the transmission or reception is actually carried out by a base station. Typically, a downlink cell is linked or associated with a corresponding uplink cell. However, it should be noted that it would in principle be possible to organise a communication system which may have cell-like features without explicit cells being defined. For example, an explicit cell identity may not be needed in all cases. Incidentally, references to "cells" henceforth implicitly include the base station(s) responsible for those cells, unless the context demands otherwise.

Each BS divides its available time and frequency resources in a given cell, into individual resource allocations for the user equipments which it serves. The user equipments are generally mobile and therefore may move among the cells, prompting a need for handovers of radio communication links between adjacent cells. A user equipment may be in range of (i.e. able to detect signals from) several cells at the same time, but in the simplest case it communicates with one "serving" cell. The serving cell may be one of a co-operating group of cells in a given geographical area, as explained later.

Modern wireless communication systems such as LTE and LTE-A are hugely complex and a full description of their operation is beyond the scope of this specification. However, for assisting understanding of the inventive concepts to be described later, some outline will be given of some of the features of LTE which are of particular relevance in the present invention. As an aside, references herein to LTE are taken to include later versions of LTE, such as LTE-A, where not specifically excluded. In terms of the numbering used by 3GPP, 3GPP Release 8 and 9 relate to LTE, and Release 10 onwards to LTE-A.

### OFDM and OFDMA

OFDM (Orthogonal Frequency Division Multiplexing) is one known technique for transmitting data in a wireless communication system. An OFDM-based communications scheme divides data symbols to be transmitted among a large number of subcarriers, hence the term frequency division multiplexing. Data is modulated onto a subcarrier by adjusting its phase, amplitude, or both phase and amplitude. The "orthogonal" part of the name OFDM refers to the fact that the spacings of the subcarriers in the frequency domain are specially chosen so as to be orthogonal, in a mathematical sense, to the other subcarriers. In other words, they are arranged along the frequency axis such that the sidebands of adjacent subcarriers are allowed to overlap but can still be received without inter-subcarrier interference. As the user equipments will receive the same signals at slightly different timings, in other words with a certain delay spread, each OFDM symbol is preceded by a cyclic prefix, which is used to effectively eliminate intersymbol interference.

When individual subcarriers or sets of subcarriers are assigned to different user equipments, the result is a multi-access system referred to as OFDMA (Orthogonal Frequency Division Multiple Access), as used in LTE, LTE-A and WiMAX for the downlink - in other words for communication from base stations to user equipments. By assigning distinct frequency/time resources to each user equipment in a cell, OFDMA can substantially avoid interference among the users served within a given cell.

### Frame Structure and Resource Blocks

In a wireless communication system such as LTE/LTE-A or WiMAX, data for transmission on the downlink is organised in OFDMA frames each divided into a number of sub-frames. Generally, two different duplex modes are provided for separating the downlink and the uplink: frequency division duplex (FDD) and time division duplex (TDD). In FDD, the downlink and uplink are transmitted at the same time but on different frequencies. In TDD, the uplink and downlink are on the same frequencies and therefore are separated in the time domain. Frames follow successively one immediately after the other, and each is given a system frame number (SFN).

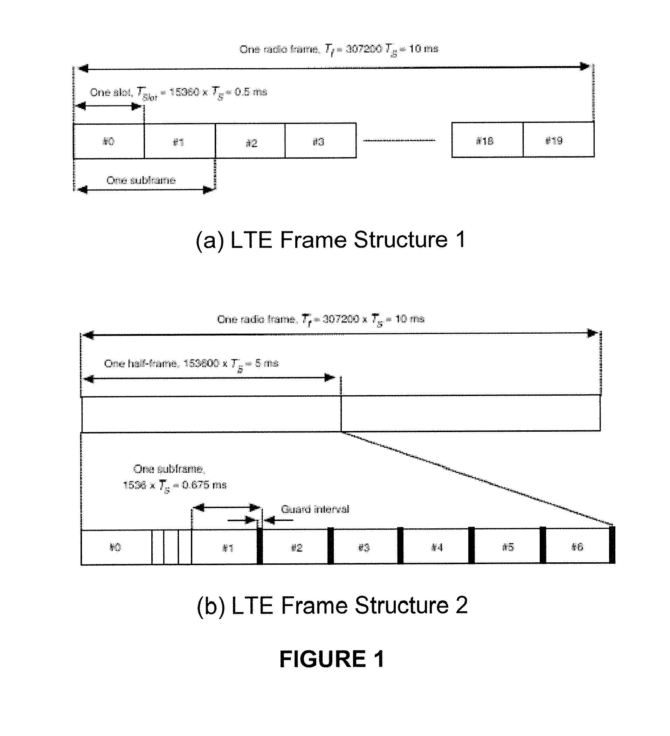

Various frame types are possible and differ between FDD and TDD. Figure 1 shows frame structures for LTE: the upper part (a) of the Figure shows a so-called Frame Structure 1 which is intended for FDD, in which the 10 ms frame is divided into 20 equally sized slots of 0.5 ms, all of which may be used for the downlink (a similar frame structure is used for the uplink, separated in frequency). A sub-frame SF consists of two consecutive slots, so one radio frame contains 10 sub-frames. The lower part (b) of Figure 1 shows a Frame Structure 2 which is provided for TDD. In this instance the subframes are allocated either to downlink or uplink; in other words, a configuration of subframes is chosen in dependence upon the relative amounts of DL and UL traffic, with one or more switch points where transmission switches between DL and UL.

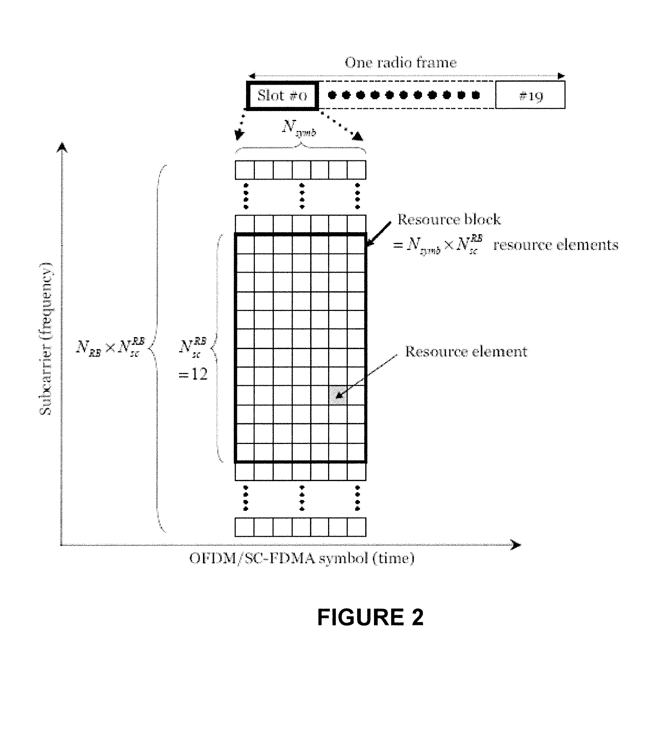

Figure 2 shows a so-called downlink resource grid for the duration of one downlink slot. One downlink slot consists of Nsymb OFDM symbols in general; for example (as in the example shown) Nsymb = 7. The transmitted signal in each slot is described by a resource grid of sub-carriers and available OFDM symbols, as shown in Figure 2. Each element in the resource grid is called a resource element (RE) and each resource element corresponds to one symbol and one subcarrier.

OFDMA allows access by multiple UEs to the available bandwidth as already mentioned. Each UE is assigned a specific time-frequency resource. The data channels are shared channels, i.e. for each transmission time interval of 1 ms, a new scheduling decision is taken regarding which UEs are assigned to which time/frequency resources during this transmission time interval. The basic scheduling unit for allocation of resources to the UEs is called a resource block (RB). As shown in Figure 2, one resource block is defined as typically 7 consecutive OFDM symbols in the time domain and 12 consecutive sub-carriers in the frequency domain (and thus, 84 REs). The resource block size is the same for all system bandwidths, therefore the number of available physical resource blocks depends on the bandwidth.

Several resource blocks may be allocated to the same UE, and these resource blocks do not have to be adjacent to each other. Scheduling decisions are taken at the base station (eNodeB in LTE terminology). The scheduling algorithm has to take into account the radio link quality situation of different UEs, the overall interference situation, Quality of Service requirements, service priorities, etc.

### Channels

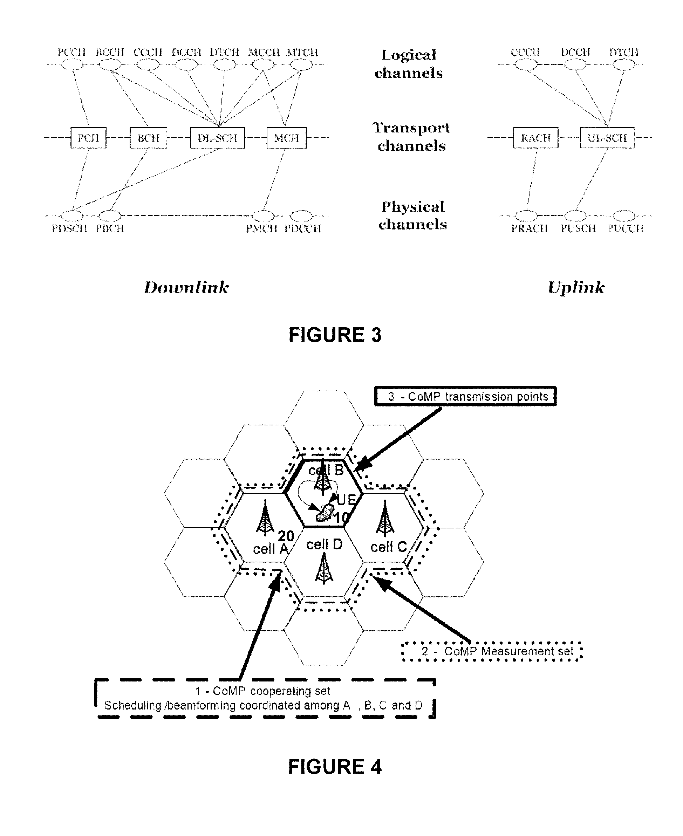

Several channels for data and control signalling are defined at various levels of abstraction within the network. Figure 3 shows some of the channels defined in LTE at each of a logical level, transport layer level and physical layer level, and the mappings between them.

On the downlink, user data as well as various reference signals (see below) are carried on the Physical Downlink Shared Channel (PDSCH). There are various control channels on the downlink, which carry signalling for various purposes including so-called Radio Resource Control (RRC), a protocol used as part of the above-mentioned RRM. In particular the Physical Downlink Control Channel (PDCCH), Physical Broadcast Channel (PBCH) and Physical Multicast Channel (PMCH) are provided. PDCCH is used to carry scheduling information - called downlink control information, DCI - from the base stations to individual UEs.

Meanwhile, on the uplink, user data and also some signalling data is carried on the Physical Uplink Shared Channel (PUSCH), and control channels include a Physical Uplink Control Channel, PUCCH, used to carry signalling from UEs including channel quality indication (CQI) reports, precoding matrix information (PMI), a rank indication (RI) for MIMO (see below), and scheduling requests.

### Reference Signals

To facilitate measurements of the radio link properties by UEs, and reception of some transmission channels, reference signals are embedded in the downlink sub-frame as transmitted from each antenna of an eNodeB or more accurately for LTE/LTE-A, "antenna port". The term "antenna port" is sometimes preferred when referring to transmissions from multiple antennas, since it is possible for multiple physical antennas to jointly transmit a given signal and thus act as a single antenna port. A given set of physical antennas may also support more than one antenna port. Each base station may comprise a plurality of antenna ports, and may provide one or more cells. Consequently the antenna ports have a relationship with the cells; for example in one possible relationship one or more antenna ports are associated with a given cell.

The reference signals associated with each antenna port provide an amplitude and/or phase reference for allowing the UEs to correctly decode the remainder of the downlink transmission. In LTE reference signals can be classified into a cell-specific (or common) reference signal (CRS), a Multicast-Broadcast Single Frequency Network (MBSFN) reference signal used in Multimedia Broadcast Multicast Service (MBMS), and a user equipment-specific reference signal (UE-specific RS). There are also positioning reference signals, and the UE-specific reference signals are also commonly termed demodulation reference signals, DM-RS.

In the case of two transmit antenna ports in LTE, therefore, reference signals are transmitted from each CRS antenna port. The reference signals on the second antenna port are offset in the frequency domain by three sub-carriers, from those on the first antenna port and to allow the UEs to accurately measure the radio link properties, nothing is transmitted on the other antenna port at the same time-frequency location of reference signals.

LTE-A introduces further reference signals including a UE-specific Channel State Information Reference Signal CSI-RS (see below).

### MIMO and CoMP

A technique called MIMO, where MIMO stands for multiple-input multiple-output, has been adopted in LTE due to its spectral efficiency gain, spatial diversity gain and antenna gain. MIMO schemes employ multiple antennae at the transmitter and/or at the receiver to enhance the data capacity achievable between the transmitter and the receiver. By way of example, in a basic 2x2 MIMO configuration there are two antennae at the transmitter and two antennae at the receiver. There is no need for the transmitter and receiver to employ the same number of antennas. Typically, a base station will be equipped with more antennas in comparison with a UE (which may often be, for example, a mobile handset), owing to differences in power, cost and size limitations.

It is possible to coordinate the MIMO transmissions among multiple antennas (or antenna ports) belonging to the same base station (i.e. coordinating transmissions within a single cell) or among multiple base stations (i.e. coordinating transmissions in adjacent or nearby cells) to reduce inter-cell interference and improve the data rate to a given UE. This is called coordinated multi-point transmission/reception or CoMP. Of particular relevance to the invention to be described, one downlink scheme used in CoMP is "Coordinated Scheduling and/or Coordinated Beamforming (CS/CB)" as illustrated in Figure 4.

In CS/CB, data to a single UE is transmitted from one cell (or transmission point), but decisions regarding user scheduling (i.e. the scheduling of timings for transmissions to respective UEs) and/or beamforming decisions are made with coordination among the co-operating cells. In other words, scheduling/beamforming decisions are made with coordination between the cells participating in the coordinated scheme so as to prevent, as far as possible, a single UE from receiving signals from more than one cell. Thus, in coordinated scheduling, each UE is served by a single cell but one cell may reduce its transmission power on a set of time-frequency resources for the benefit of UEs in a second cell. Incidentally, the term "coordinated scheduling" is used henceforth also to denote coordinated beamforming and cell selection.

As shown in Figure 4, there is a co-operating group (or set of) cells A, B, C and D as outlined by the dashed line and labelled at "1 - CoMP co-operating set". For illustrative purposes only, each cell is provided by a respective base station 20. In this example, the same set of cells forms a CoMP measurement set (outlined by the dotted line, labelled "2 - CoMP measurement set"), on which a UE 10 may make measurement reports. However, as indicated by the solid line labelled "3 - CoMP transmission points", only cell B actively transmits data to the UE, while the user scheduling/beamforming decisions are made with coordination among cells A, B, C and D of the CoMP co-operating set so that the co-channel inter-cell interference among the co-operating cells can be reduced or eliminated.

Various modes of MIMO transmission are possible. LTE defines several "Transmission Modes" (TMs) with Release-11 adding a new TM10 for CoMP, which defines channel quality reporting for multiple non-zero-power CSI-RS (see below), and in which an interference measurement for each of the CSI reports is obtained from a defined zero-power CSI-RS.

In MIMO scenarios, the UE will be expected to provide feedback to the network regarding how its transmissions should be formed in terms of, e.g., number of spatial layers, i.e. rank (RI), precoding (PMI) and modulation and coding scheme (CQI). In the case of a coordinated multipoint (CoMP)-enabled network, this feedback information could be derived as a function of some, or all, of the channels between the multiple transmission points in the co-operating group of cells and the UE (as indicated by the CoMP measurement set in Figure 4), compared to the simple case of having only one transmission point and one associated channel to the UE.

### Heterogeneous and Small-Cell Networks

Figure 4 shows CoMP being performed by cells of equal size, such as macro cells. Conventionally, a wireless cellular network is a homogeneous network providing a patchwork of wide-area or macro cells which, though they may vary in shape and size and overlap to a degree, each serve a distinct geographical area and have a similar status.

However, recently there is much attention being paid to so-called heterogeneous networks in which there are layers cells of different sizes including, in addition to conventional macro cells, so-called "small cells" comprising femto, pico and/or micro cells, the small cells located completely within the macro cells. The general motivation for such heterogeneous networks is to improve capacity of the macro cell network by providing hotspots within the macro cells. To maximise the capacity gains capable of being realised, it is important for the macro and small cells to co-operate, or in other words to form a co-operating group of cells with respect to one UEs or a set of UEs. Thus, generally small cells employ licensed spectrum and are managed by an operator of the macro cells.

In the case of LTE, femto cells are provided by a minaturised base station called a Home eNodeB (HeNB) which is expected to find widespread use in homes and offices, linked to the core LTE network via broadband Internet. The term eNodeB henceforth includes HeNB unless the context demands otherwise.

In both CoMP and Small Cell scenarios, the UE will be expected to provide feedback to the network regarding how its transmission would be formed in terms of, e.g., transmission rank (RI), precoding (PMI) and modulation and data rate/coding scheme (CQI). This feedback information could be derived for some, or all, of the channels between the multiple transmission points in the co-operating group of cells and the UE. Advanced CoMP schemes may also perform better if some more explicit information regarding the radio channel is available. CoMP performance may be improved by using measurements not only the channels within the co-operating group, but by also providing to the network some feedback regarding interference being received from outside the co-operating group - here termed 'out-of-group interference' (OGI). The network performance from coordinated scheduling can also be improved with the knowledge of OGI, as time-frequency resources that are least affected by OGI can be preferentially scheduled for transmission.

In the (Release 10) LTE-A specifications, the above mentioned CSI-RS are introduced which are defined for 1, 2, 4 or 8 antenna ports of a cell and which have a much lower density in time and frequency than the Common Reference Symbols (CRS), and a hence much lower overhead. Their purpose is to allow improved estimation of the channel for feeding back RI/PMI/CQI and possibly other related parameters to the network. CSI-RS can thus be viewed as LTE-A's solution to channel estimation and feedback for high-rate PDSCH (downlink data transmission) scenarios. CSI-RS patterns in time and frequency can be configured by higher layers to allow considerable flexibility over which resource elements (REs) contain them.

Furthermore, to support CoMP operation, a LTE Release 11 UE can be configured with multiple CSI-RS patterns specific to its cell:
- Up to three configuration for which the UE shall assume non-zero transmission power for the CSI-RS; these are referred to below as "non-zero-power" CSI-RS; and
- Zero or more configurations for which the UE shall assume zero transmission power for the CSI-RS. These are referred to henceforth as "zero-power" or "muted" CSI-RS (the terms "muted CSI-RS" and "zero-power CSI-RS" are used interchangeably from now on).

A RE configured as a zero-power CSI-RS with respect to a serving cell can be assumed by the UE to be empty (free of DL transmission from the serving cell). In this way, the transmissions on channels in a co-operating group can be measured without interference from the serving cell.

The purpose of the zero power CSI-RS is to ensure that resources so-configured can be assumed by the UE to not to contain CSI-RS on which the UE should make channel measurements (corresponding to the cells it is co-operating with in a CoMP scenario). That is, it is indicated to the UEs that the cell does not transmit any signal on a RE that is designated for a zero-power CSI-RS (and consequently that the RE is not to be used for data, in other words will be excluded from inclusion in PDSCH). In such a RE, the UE will not be able to make channel measurements but may take other actions as normal.

In addition, zero-power CSI-RS can also be configured as interference measurement resources on which the UE should make measurements to assess the interference level. It will be understood that in this case, the measurement is not of any signal from the serving cell, but rather of noise/interference due to other cells. In the case of a co-operating group, this noise/interference would be produced by "out-of-group" cells (OGI).

Although CoMP is not directly supported by the LTE Release 10 specifications, knowledge of the presence of zero power CSI-RS patterns can be used by a Release 10 UE to mitigate the possible impact of CoMP on data transmissions using PDSCH. That is, knowing the locations of CSI-RS can avoid the UE trying to decode them as data in PDSCH, and allowing adjacent REs (which may contain PDSCH) to be decoded correctly.

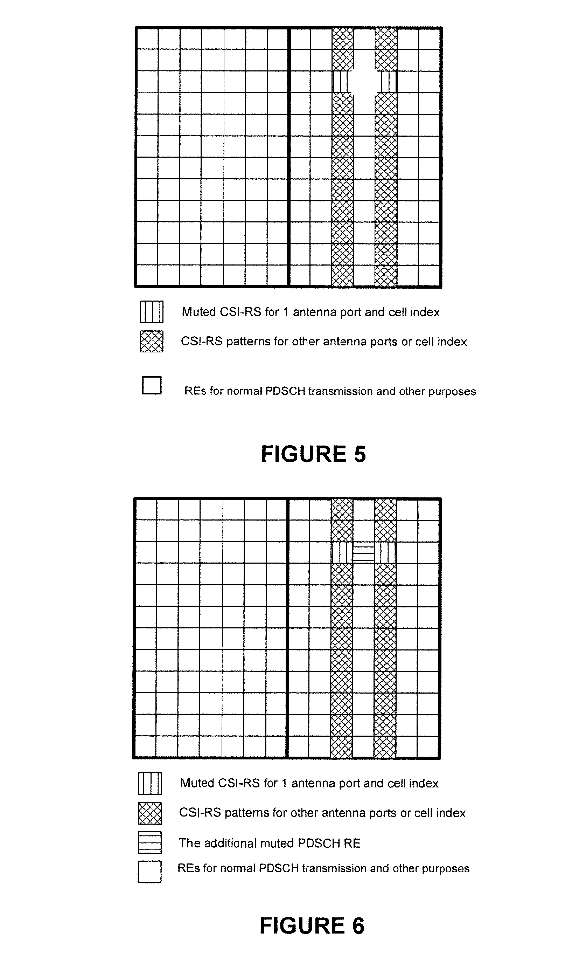

Figure 5 shows one of the possible CSI-RS configurations for TDD, based on an RB pair, which is formed by two adjacent RBs each as shown in Figure 2. Ordinarily the first RB of the pair does not contain the CSI-RS (since, particularly for TDD, the first RB is assumed to be too congested with other reference signals). In this example, which is applicable to LTE Frame Structure 2, the CSI-RS are contained in specific symbols one RE apart. The cross-hatched squares represent REs occupied by "normal" CSI-RS. The squares marked with vertical lines represent zero-power CSI-RS. In LTE the CSI-RS with non-zero power corresponding to a single CSI-RS antenna port are transmitted in a pair of REs in a given RB. This allows higher power than if only one RE is used. Alternatively, the CSI-RS for two ports can be transmitted in two REs, and distinguished by the use of orthogonal sequences. If a pair of REs is configured as zero-power CSI-RS (e.g. for interference measurement) then there is no particular associated port or sequence.

With use of the above configuration possibilities provided in Release 11, it has been proposed to coordinate resource use and reference signal patterns among the several cells and/or eNodeBs operating in a coordinated multipoint (CoMP) group, so that a UE is able to measure the interference arising from outside of the CoMP group without these measurements being disturbed by transmissions from within the group. Hitherto, however, it has been assumed that transmissions from the co-operating cells in a CoMP network are perfectly time-aligned.

### Summary of the Invention

According to a first aspect of the present invention, there is provided a method for measuring out-of-group interference, OGI, in a wireless communications system providing a co-operating group of cells which coordinate their transmissions with respect to one or more terminals, transmissions in the system being scheduled in units of resource elements, REs, where the REs have defined locations in time and frequency, and in units of resource blocks, RBs each containing multiple REs, the method comprising:
configuring a terminal with locations of a plurality of REs within the same RB that it should assume to have muted transmissions from at least one of the co-operating group of cells;
for at least a predetermined pair of REs among said plurality of REs, muting transmissions from the at least one of the co-operating group of cells not only in the predetermined pair of REs, but also in at least one additional RE located adjacent to at least one of the predetermined pair of REs; and
at the said terminal, measuring OGI in one or more of the predetermined pair of, or at least one additional, REs.

Here, "muted" REs may be ones in which at least one of the co-operating group of cells are configured to make no transmission (in other words, zero-power REs); however, this is not essential as explained below.

One effect of the above arrangement, in embodiments of the present invention, is that transmissions with respect to the terminal are muted (for the at least one of the co-operating group of cells) in a sequence of three or more REs.

In embodiments, all the cells in the co-operating group of cells mute their transmissions within the muted REs. In other embodiments, depending on distance/power of certain cells with respect to the UE, it may not be necessary for all cell in the co-operating group to mute their transmissions.

The above configuration and measurement would normally be repeated with respect to multiple RBs across the system bandwidth. The results of multiple measurements from different RBs may be averaged to improve the measurement accuracy.

Preferably the terminal is configured with the location of the at least one additional RE.

The terminal preferably transmits at least one measurement report based on the results of the measuring. Where the measuring includes a plurality of measurements, the at least one report may be indicative of results of each measurement; alternatively, the terminal analyses the measurements, and the report is indicative of a result of the analysis.

The measurements preferably correspond respectively to the predetermined pair of, and additional, REs. Thus for example if there is a single additional muted RE then measurements may be made on reach of three REs in total.

In one possible configuration (applicable to LTE for example) the predetermined pair of REs have locations spaced apart by one or more other RE(s), and the at least one additional RE includes that one or more other RE(s).

In another possible configuration, the predetermined pair of REs have adjacent locations, and the at least one additional RE includes a RE immediately before or immediately after the adjacently-located REs.

In either case, to deal with time misalignment among the co-operating group of cells, the predetermined pair of, and at least one additional, REs are preferably located at the same frequency (on the same subcarrier in other words) so as to form a set (or sequence) of three or more REs consecutive in time.

In an alternative embodiment to deal with frequency misalignment among the co-operating group of cells, the predetermined pair of, and at least one additional, REs are located at the same time location (in other words, on the same symbol within the RB) so as to form a set of three or more REs sequential in frequency.

In any case, preferably, the co-operating group of cells is arranged for co-ordinated scheduling with transmission to the terminal by one serving cell among the group.

In a specific embodiment, the method is applied to a LTE-A wireless communication system, the predetermined pair of REs constituting "zero-power CSI-RS" for the terminal as defined in LTE-A.

According to a second aspect of the present invention, there is provided a wireless communication system comprising:
at least one terminal; and
one or more base stations providing a co-operating group of cells which coordinate their transmissions with respect to at least one said terminal, transmissions in the system being scheduled in units of resource elements, REs, the REs having defined locations in time and frequency, and in units of resource blocks, RBs, each containing multiple REs; wherein
the one or more base stations and the said terminal are configured with locations of a plurality of REs within the same RB which are to have muted transmissions from at least one of the co-operating group of cells;
at least the one or more base stations are further configured with, for at least a predetermined pair of REs among said plurality of REs, at least one additional RE adjacent to at least one of the predetermined pair of REs and which is to be muted in addition to the predetermined pair of REs; and
the said terminal is arranged to measure OGI in one or more of the predetermined pair of, or at least one additional, REs.

According to a third aspect of the present invention, there is provided a base station for use in a wireless communication system to provide one or more cells of a co-operating group of cells which coordinate their transmissions with respect to at least one terminal, transmissions in the system being scheduled in units of resource elements, REs, where the REs have defined locations in time and frequency, and in units of resource blocks, RBs each containing multiple REs; wherein
the base station is configured with locations of a plurality of REs which are to have muted transmissions from at least one of the co-operating group of cells; and
the base station is further configured with, for at least a predetermined pair of REs among said plurality of REs, at least one additional RE adjacent to at least one of the predetermined pair of REs and which is to be muted in addition to the predetermined pair of REs.

The base station is preferably further arranged to receive a report transmitted from the terminal on at least one interference measurement made by the terminal in one or more of the predetermined pair of, or at least one additional, REs.

According to a fourth aspect of the present invention, there is provided a terminal for use in a wireless communication system comprising, in addition to the terminal, one or more base stations providing a co-operating group of cells which coordinate their transmissions with respect to the terminal, transmissions in the system being scheduled in units of resource elements, REs, where the REs have defined locations in time and frequency, and in units of resource blocks, RBs each containing multiple REs; wherein
the terminal is configured with locations of a plurality of REs which it should assume to have muted transmissions from at least one of the co-operating group of cells, and, for at least a predetermined pair of REs among said plurality of REs, at least one additional RE adjacent to at least one of the predetermined pair of REs and which is to be muted in addition to the predetermined pair of REs; and
the terminal is arranged to measure OGI in one or more of the predetermined pair of, or at least one additional, REs.

As used herein, the term "resource" includes time and frequency (bandwidth) resources for wireless transmission.

As mentioned in the introduction, the term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. The term "cell" is intended also to include sub-cells, which could be sub-divisions of a cell based on using particular antennas or corresponding to different geographical areas within a cell. The cells may be associated with different base stations or with the same base station. The term "base station" itself has a broad meaning and encompasses, for example, an access point or transmission point.

Reference herein to "muted transmissions" includes reference to downlink transmission reduced or even entirely eliminated from some or all of the co-operating group of cells. In preferred invention embodiments, the downlink transmission in the muted transmission resources may be muted by a reduction of transmission power and/or by disallowing some or all transmission. For example, certain types of transmission may be disallowed (such as data transmission and/or certain types of control information transmission). Alternatively or additionally the power of the signals transmitted may be reduced, for example to below a certain threshold.

A co-operating group of cells may be all within the control of a single eNodeB, in which case the eNodeB can carry out the coordination function, In other arrangements, the cells can be controlled by more than one eNodeB. In this situation, invention embodiments provide for coordination between the eNodeBs controlling the co-operating cells. Such coordination would normally be over the X2 interface. In one embodiment, the in-group cells are provided by more than one eNodeB; and the eNodeBs providing the in-group cells exchange signalling to control the in-group co-operation, preferably in the form of one or more patterns of (group-wide) muted transmission resources and/or one or more patterns of reference signal resources. The serving eNodeB/cell may also signal the CSI-RS patterns to the UE, along with any supplemental information required to assess OGI.

For example, the eNodeB wishing to enable OGI measurement in its cells may send an indication to each eNodeB within the co-operating group, receive one or more proposed patterns and/or other information from each eNodeB, derive a suitable pattern for use in all the co-operating cells, inform the co-operating eNodeBs of the pattern and then signal this or a pattern suitable derived from it (for example by RRC) to the UE required to make OGI measurements, together with any other information required. Of course the other eNodeBs may not co-operate at one or more stages of this procedure, in which case they could simply be considered not to be part of the co-operating group, at least for the purposes of the UE feedback.

Computer program aspects of the invention relate to software (one or more computer programs) which when executed on a communications network cause it to carry out the method described above. The software may be provided on a non-transitory computer-readable medium which can be viewed as an article of manufacture.

Thus, in summary, embodiments of the present invention provide for LTE downlink coordination of CSI-RS (Channel State Information - Reference Symbol) patterns among the several cells and/or eNodeBs operating in a coordinated group, as well as the corresponding measurement schemes on these coordinated CSI-RS patterns. This coordination enables a UE to measure the interference arising from cells outside of the co-operating group (OGI), without being disturbed by the transmissions within the group, even under the condition where the time synchronization among the cells/eNodeBs is not ideal. This intercell delay-tolerant feature is enabled by configuring an additional muted data resource element (RE) adjacent to the configured muted CSI-RSs. Individual measurement can then be carried out by a terminal on these muted REs. By combining these results and possibly discarding unwanted ones, a clean measurement of out of group interference can be extracted, while maintaining tolerance to a certain degree of time difference among the cells/eNodeBs.

Setting up coordination of scheduling among cells or eNodeBs is a state-of-the-art performance enhancing technique for "Small Cells" and Coordinated Multi-Point (CoMP) scenarios in LTE. Within such a co-operation group, there are various techniques that can be taken to improve performance. However, one important requirement satisfied by the current invention is to enable more accurate measurement of the interference arising from out of the group, which is normally not within control of the co-operating group. This proposal provides for a measurement technique of the OGI, which would be resistant to the likely non-ideal synchronization among the cells/eNodeBs, and lead to more accurate assessment and feedback of the channel quality/data rate. This invention is therefore expected to improve the system throughput, provide energy savings and enhance the user experience for mobile customers.

In general, and unless there is a clear intention to the contrary, features described with respect to one aspect of the invention may be applied equally and in any combination to any other aspect, even if such a combination is not explicitly mentioned or described herein.

As is evident from the foregoing, many embodiments of the present invention involve signal transmissions between cells and terminals (UEs) in a wireless communication system. The cells are associated with one or more base stations. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNB) (which term also embraces Home eNodeB) as appropriate in different situations. However, subject to the functional requirements of the invention, some or all base stations may take any other form suitable for transmitting and receiving signals from terminals.

Similarly, in the present invention, each terminal may take any form suitable for transmitting and receiving signals from base stations. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 illustrates frame structures employed in an LTE wireless communication system, showing (a) a Frame Structure 1 for FDD and (b) a Frame Structure 2 for TDD;
Figure 2 illustrates resource allocation within a frame;
Figure 3 shows relationships between various channels defined in LTE;
Figure 4 illustrates principles employed in Co-operative Multipoint Processing (CoMP) as applied to cells;
Figure 5 shows one possible arrangement of CSI-RS reference signals in Resource Blocks, as previously proposed for LTE Frame Structure 2 (TDD);
Figure 6 shows one possible arrangement of CSI-RS reference signals in an embodiment of the present invention, for LTE Frame Structure 2 (TDD);
Figure 7 shows the effect of the embodiment on the timing of CSI-RS measurements by a UE;
Figure 8 shows another possible arrangement of CSI-RS reference signals in an embodiment of the present invention, for LTE Frame Structure 1 (FDD) and Frame Structure 2 (TDD);
Figure 9 is a flow chart of a general invention embodiment;
Figure 10 is a schematic block diagram of a base station for use in the present invention; and
Figure 11 is a schematic block diagram of a terminal for use in the present invention.

### Detailed Description

If it were possible to obtain clean measurements of OGI, system performance with CoMP could be improved, for example in delivering higher data rates to users; maintaining data rates and reducing transmission power levels; and allowing more accurate scheduling decisions to be taken thus improving resource efficiency. Therefore, techniques for providing the LTE network with means to coordinate its transmissions in such a way as to allow the UE to obtain measurements of OGI, and to instruct the UE in the manner of doing so, are of significant interest.

As already mentioned, for the purpose of OGI measurement, it has hitherto been assumed that transmissions from the co-operating cells in a CoMP network are perfectly time-aligned (at least within the cyclic prefix duration of an OFDM system) so that appropriate muting of CSI-RS can allow a "clean" OGI measurement to be obtained. However, particularly in future versions of CoMP with non-ideal synchronization, and in the "Small Cell" scenario, this may not be the case.

For example, a time difference may arise between eNodeBs which co-operate over a backhaul link (such as broadband Internet in the case of HeNBs), owing to delay time in transmission over this link. This delay can prevent an eNodeB from knowing the precise starting/finishing timings of subframes transmitted from cells of other eNodeBs, leading to misalignments in timing which can persist for many frames. Although techniques are available for achieving synchronization between eNBs, even with imperfect backhaul links, these involve additional hardware and costs, which is undesirable especially in a heterogeneous network/SmalICell scenario employing low-cost femtocells and the like.

The lack of perfect synchronization among co-operating cells may be caused by non-ideal inter cell interfaces as well as latency in backhaul networks. Whilst more likely when the co-operating cells are provided by physically-distinct eNodeBs, timing differences might also arise where cells are provided by the same eNodeB. In the present release of LTE, there is no particular provision to accommodate such lack of synchronization while still providing accurate OGI measurement without being affected by the in-group transmission. The lack of synchronization would clearly make OGI measurement difficult.

Consequently, for co-operating cells with non-ideal time synchronization (e.g. with timing difference exceeding the cyclic prefix in an OFDM system) between the co-operating cells, OGI measurement will be corrupted by in-group transmissions even if the same muted CSI-RS patterns are configured for all the co-operating cells. This would make co-ordinated scheduling more difficult to implement effectively.

Embodiments of the present invention are applicable in the situation where timing differences arise among co-operating cells which are too large to be ignored. The basic principle of embodiments is to coordinate transmissions, or muting of transmissions, among some or all of the co-operating cells and possibly several eNodeBs in a co-operating group such that certain subsets of resource elements (REs), configured as zero-power CSI-RS for a given UE, experience reduced or eliminated transmissions from within the CoMP group, and the scheme is made resistant to a certain degree of un-synchronization between the cells and tolerant to a certain degree of timing difference between the serving cell and the interfering cells (also referred to as "intercell delay"). For example, in typical embodiments the OGI measurements may be made even where the subframe timings of cells may be misaligned by up to two OFDM symbols. The invention also provides for extending the number of REs belonging to a CSI-RS configuration in order to improve the robustness of the measurement.

Coordination of time-domain and frequency domain DL transmissions is assumed for this purpose of OGI measurement. (Explicit coordination in the frequency domain might not be required, for example where all cells are using the same carrier frequency). A UE can then be configured by an eNodeB to make channel and/or OGI measurements in coordinated REs. These measurements are those necessary to allow the UE to formulate feedback to the network incorporating a recommendation for DL precoding to help mitigate the effects of OGI (or to allow the network to determine suitable such DL precoding itself). The embodiments are relevant in two main network scenarios: (i) all the cells belong to one eNodeB which is able to impose its coordination choices on its cells; and (ii) where multiple eNodeBs are co-operating and there must be some new messages exchanged (e.g. over the X2 interface) to reach a coordinated decision on which REs are to be made available for OGI measurements.

In general, unless otherwise indicated, the embodiments described below are based on LTE, where the network comprises one or more eNodeBs, each controlling one or more downlink cells, each downlink cell having a corresponding uplink cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH) to the UEs. A PDCCH message typically indicates whether the data transmission will be in the uplink (using PUSCH) or downlink (using PDSCH), it also indicates the transmission resources, and other information such as transmission mode, number of antenna ports, data rate, number of codewords enabled. In addition PDCCH may indicate which reference signals may be used to derive phase reference(s) for demodulation of a DL transmission. Reference signals for different antenna ports, but occupying the same locations, are distinguished by different spreading codes.

The cells in a co-operating group may co-operate in the transmission of signals (such as PDSCH) to a UE. In the case of CoMP, one or more cells in the CoMP group may become serving cells for a given UE. Embodiments of the present invention are particularly, but not necessarily exclusively, relevant to coordinated scheduling in which one of the cells in the group is dynamically selected as the serving cell of the UE at a given time.

In order for the eNodeB (or group of eNodeBs) to schedule efficient transmissions to UEs with appropriate transmission parameters and resources, each UE provides feedback on the DL channel state for one cell, or a group of serving cells to the eNodeB(s) controlling the serving cell(s) for that UE. This feedback includes measurements of the CSI-RS, including measurements of the noise/interference power level on zero-power CSI-RS.

Figure 5 shows a possible zero-power CSI-RS Pattern for LTE Frame Structure 2 (TDD) in this case. The pattern defines the locations for the zero-power CSI-RS corresponding to a specific antenna port and cell index. In Figure 5, and in subsequent Figures, RBs are depicted in corresponding form to that shown in Figure 2, such that small squares represent REs, the x-axis represents time (symbols) and the y-axis frequency (subcarriers). In a given system deployment, multiple RBs are defined across the operating bandwidth of the system (system bandwidth), each typically containing the same arrangement of signals assigned to REs.

According to existing LTE specifications, in this example, two muted CSI-RS are placed on the 3^{rd} row (in other words in the same subcarrier), and in the 10^{th} and 12^{th} columns (in other words spaced apart by one symbol). It should be noted that this is only one example: each antenna port has its own CSI-RS pattern, and each cell in the group may comprise a plurality of antenna ports. Thus, there is a CSI-RS pattern for each antenna port within a cell and for each cell in the group, the cells being identified by a cell index, which is an ID number assigned from a set of large enough that for practical purposes, it is a unique number within the group. Consequently, CSI-RS in locations other than those shown in Figure 5 would correspond to a different cell index and/or antenna port. Strictly speaking, however, the zero-power CSI-RS do not correspond to a specific antenna port since nothing is transmitted in them.

According to embodiments of this invention, additional REs are allocated to zero power CSI-RS, so that CSI-RS REs are arranged in groups of 3 REs adjacent in the time domain. In other words at least one new and additional, muted RE is associated with an existing pair of zero-power CSI-RS as provided in existing LTE-A specifications. From the viewpoint of the UE, it makes no difference whether such additional REs are regarded as muted REs distinct from zero-power CSI-RS, or as extensions of the zero-power CSI-RS. In LTE this allocation of additional REs is possible provided there are no more than two CRS antenna ports configured. For more CRS ports there would be an overlap between CRS and zero power CSI-RS. That is, the CRS have locations laid down in LTE specifications and in the case of more than two CRS antenna ports, the CRS will take up locations required to configure the additional muted RE required in embodiments.

In a first embodiment, in an LTE system, a coordinating eNodeB configures all the cells within the co-operating group to have a common muted CSI-RS pattern, in other words to transmit a downlink subframe with common zero-power CSI-RS locations. In these group-specific muted CSI-RS patterns, the locations of which are signalled to the UEs, a UE can then make measurements of OGI by monitoring the REs corresponding to possible locations of PDSCH transmissions from cells outside the group. The UE(s) can assume that only noise and OGI are present in these REs.

Figure 6 shows one example of how the zero-power CSI-RS are modified by the addition of one or more muted REs in an embodiment of the present invention, again for frame structure 2 (TDD). As in Figure 5, the CSI-RS pattern for one antenna port and one particular cell index are 2 REs that are located in the same subcarrier, with one PDSCH RE (if no DMRS for LTE release 8 is configured) placed in between the 2 CSI-RS REs. In order to increase tolerance to the intercell delay, this additional data RE is also muted - as indicated in the Figure. This additional RE may also be viewed as an extension of the existing zero-power CSI-RS provided in LTE specifications.

Incidentally, if Release-8 DMRS are configured, for a particular PDSCH transmission in a given set of RBs, then they will take up the REs required to implement this embodiment, so that the invention cannot be applied to such RBs. Release 8 DMRS is an optional configuration to provide backwards compatibility when a mixture of UEs are present.

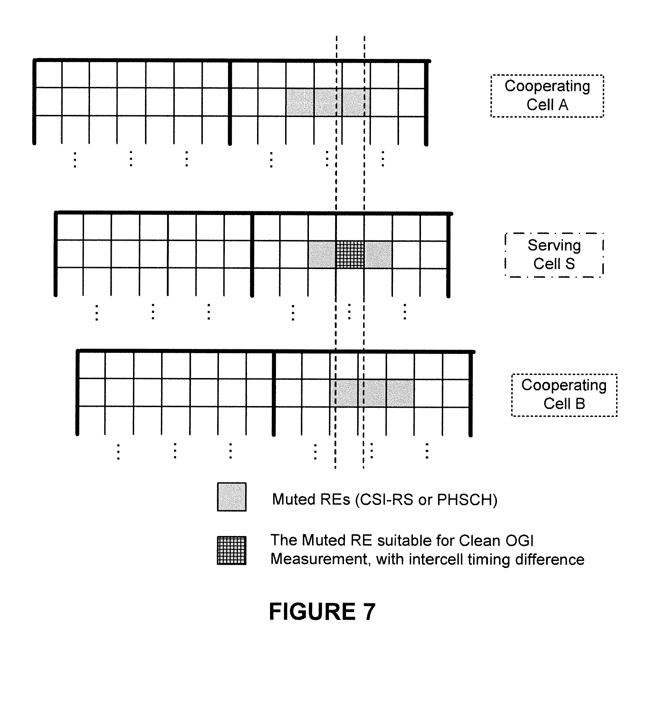

Under this configuration, a timing difference of maximum 1 OFDM symbol (width of a RE) can be tolerated between the serving cell and the interfering cells for clean measurement of the OGI. The reason is explained in Figure 7. The shadowed areas in Figure 7 are the proposed muted REs including muted CSI-RS and muted PDSCH RE. It can be seen that the measurement on the 2^{nd} RE of the sequence of three muted REs in Serving Cell "S" will not be affected by transmission from the Cooperating Cells (A & B) as long as the timing difference is not larger than one OFDM symbol. (As will be explained later, depending on the circumstances delays of up to 2 symbols can also be dealt with).

As will be apparent from the above, a sequence of three REs are muted in a PRB at the same location among the co-operating cells in order to have a clean measurement of OGI on one RE.

Incidentally, although only a single muted CSI-RS pattern is shown in Figure 6, it is possible to configure a second or further such pattern, so as to apply the principle of the invention multiple times within the same RB. In addition, similar measurements may be made in multiple RBs across the system bandwidth, and multiple measurements may be averaged in order to increase the measurement accuracy (at the cost of reduction in frequency domain resolution).

In a second embodiment, OGI measurement is carried out on all the three configured muted REs instead of on only the middle REs. The measurement on the 1^{st} and 3^{rd} REs in the sequence is corrupted by in group transmissions. However, these results can be compared to the clean measurement of the 2^{nd} RE and be used to estimate the exact timing difference between the serving cell and other co-operating cells. For example, the ratio of measured signal strength (or power) in each of the first and third REs can be used to estimate a timing difference between the serving cell and one other cell having a strong signal at the UE. The estimation will be more difficult when there are multiple cells having timing differences with the serving cells and signals strong enough to cause interference.

If an estimate of the timing difference is obtained, this can be utilised if desired to take appropriate corrective action. For example a coordinating eNodeB within the group (such as a macro cell eNodeB) may instruct a small cell eNodeB to adjust its timing so as to become better synchronised with the rest of the group.

In a third embodiment, it is assumed that in the co-operating group there is only one strong interfering cell and interference from other cells can be ignored. This would be the case for example if there is an eNodeB operating a cell relatively close to the UE and in which coordinated scheduling is not functioning perfectly owing to time differences with respect to another eNodeB which provides the serving cell. In this case, the maximum tolerable timing difference between the serving cell and the interfering cell can be extended to 2 symbols for clean measurement of the OGI. This is done by doing individual measurement on the 3 muted REs. The obtained results should show that there are 2 REs having stronger measured interference power while a 3^{rd} RE which retains a clean measurement of the OGI will have the lowest interference power due to the absence of the in-group transmissions.

In the third embodiment, the UE may simply send the results of each individual measurement to the network for evaluation. Alternatively, the UE itself may analyse the measurements and report the result of analysis to the network.

Incidentally, performing three measurements in this way may enable the network to know that no significant timing differences exist affecting that UE, allowing the addition of the muted RE to be suspended for that UE, and the RE thus freed to be employed for other purposes such as PDSCH.

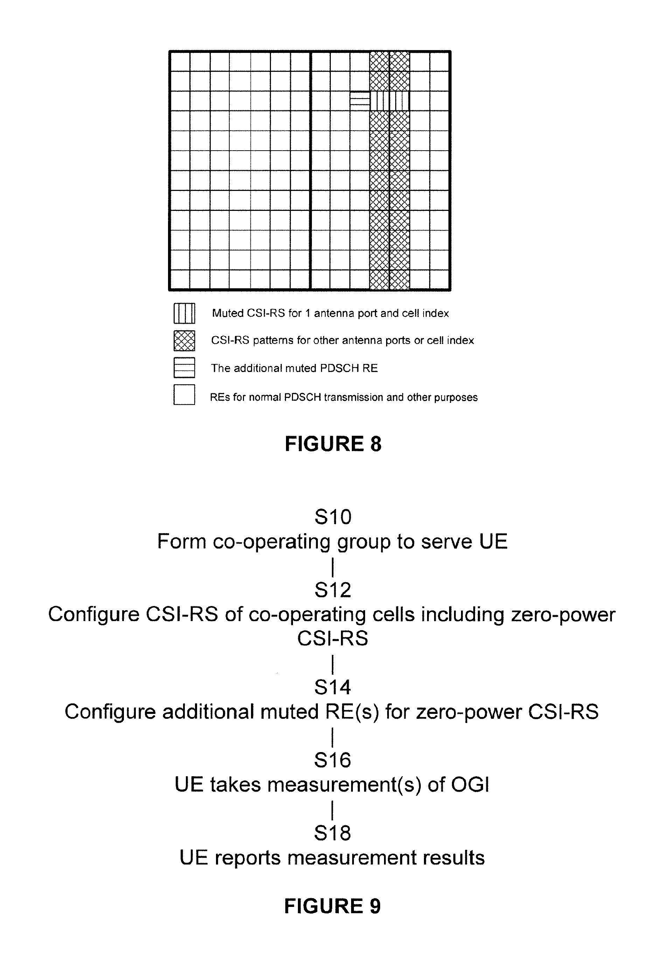

In a set of variations on the above embodiments, the subset of CSI-RS patterns applicable for both TDD and FDD are considered, since only a subset of the patterns defined in LTE are available for FDD. Figure 8 shows a possible CSI-RS Pattern for LTE Frame Structure 1 (FDD) and Frame Structure 2 (TDD), in an embodiment of the present invention. This CSI-RS pattern provides (in accordance with LTE specifications) CSI-RS on adjacent REs, rather than on REs spaced one symbol apart as in Figures 5 and 6. In this case, the additional muted RE is placed in the OFDM symbol before a pair of configured zero power CSI-RS REs as shown in Figure 8, again forming a sequence of three REs.

Incidentally, although the Figure 8 arrangement can be used for TDD, the use of Rel-8 DMRS is expected to be more likely for TDD and if so then the CSI-RS pattern according to Figure 6 is preferable (since the CSI-RS will not collide with the DMRS).

Figure 9 is a flowchart outlining steps taken in embodiments.

Firstly, a co-operating group of cells is formed with respect to one UE or a set of UEs (step S10). As already mentioned this group may employ coordinated scheduling in which only one cell serves the UE and the other cells co-ordinate their transmissions to avoid in-group interference. Such coordinated scheduling is tolerant of a degree of timing misalignment among the cells (unlike joint transmission for example).

Next (S12), the network configures CSI-RS for the group of cells and a specific UE, including one or more zero-power CSI-RS patterns. This may be configured at the eNodeB level, for example at a macro cell eNodeB within the group. Where there is more than one co-operating eNodeB, this would require X2 interface exchange of the common group-wide CSI-RS pattern among all co-operating eNodeBs. As mentioned earlier, and in accordance with previous proposals, the zero-power CSI-RS are arranged to be located on common REs for each cell so as to permit measurement of OGI by the UE.

Then (S14) the additional muted RE(s) provided in the present invention are applied, using any of the embodiments described above. The decision to do so may be taken in response to the network (macro eNodeB) having received some indication of a timing misalignment within the group, obtained by other means. Alternatively it may be decided to perform the method of the invention on a trial basis, to determine whether it makes any difference to the OGI measurements of UEs; or, the addition of one or more muted REs may be set as part of the system configuration, thereby applying the present invention on a precautionary basis whether or not it is actually needed. It is possible to provide the additional REs for zero-power CSI-RS of one, some, or all UEs served by the group.

The UE then takes measurements of OGI on one or more of the locations corresponding to the zero-power CSI-RS and any additional muted RE (step S16).

Finally, in step S18 the UE either sends the measurement results directly to the network (typically, to the serving cell) or analyses the measurements in some way prior to sending a report.

In the above embodiments, interference measurements made on each of the zero-power CSI-RS and muted REs could be used to derive different CSI reports, based on different interference levels. Alternatively, the interference measurements could be reported directly.

It is known that channel related measurements may be averaged in the frequency domain (or the time domain). Such averaging could be applied to the measurements made according to this invention, for example by the UE prior to sending a report to an eNodeB.

The above embodiments aim to mitigate the effects of non-ideal time synchronization, by considering muted resource elements which are adjacent in the time domain, but a similar principle could also be applied in the frequency domain to mitigate the effects of non-ideal frequency alignment. However, timing differences are expected to be more of a problem than frequency differences.

If applied to frequency-domain misalignments, an embodiment of the present invention would involve placing a muted RE above and/or below (in a frequency sense) the REs configured for zero-power CSI-RS, thus forming a "sequence" (in the frequency sense) of three or more REs. This would, however, risk collision with "normal", non-zero-power CSI-RS of other antenna ports.

Implementation of the invention may involve modification of the system specifications. If the invention were to be included in 3GPP specifications for LATE it would probably be in the following form:
- RRC signalling to configure the additional muted REs (alongside REs already configured as zero power CSI-RS for interference measurement). This could be in the form of a flag to indicate that all zero-power CSI-RS should be extended, or more specific information to indicate that particular CSI-RS RE(s) should be extended.
- RRC signalling to configure the interference measurements to be made. Such signalling could indicate one or more of options such as the following:
   o Measurements using the central RE only
   o Measurements using each of the 3 REs
   o Selection of the lowest interference measurement from each of the 3 REs

The invention could be applied directly as an extension to Transmission Mode 10, where one CSI Process corresponds to a single set of CQI reports. Thus if one interference measurement is configured, this would correspond to one CSI process. If multiple interference measurements are configured this would correspond to multiple CSI processes.

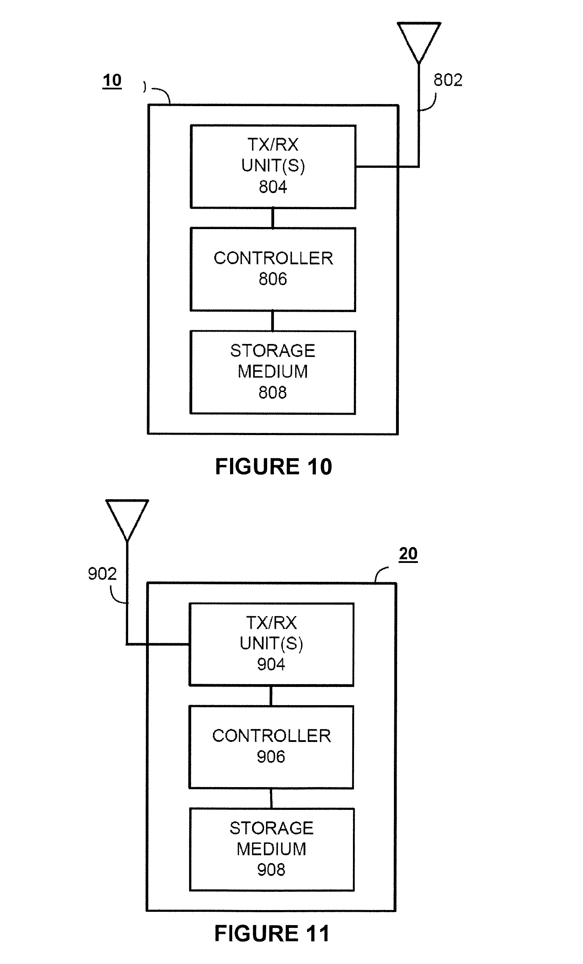

Figure 10 is a block diagram illustrating an example of a terminal 10 to which the present invention may be applied. The terminal 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 10 includes transmitter/receiver unit(s) 804 connected to at least one antenna 802 (together defining a communication unit) and a controller 806 having access to memory in the form of a storage medium 808. The controller may be, for example, microprocessor, digital signal processor (DSP), ASIC, FPGA, or other logic circuitry programmed or otherwise configured to perform the various functions described above, such as taking interference measurements in one or more of the muted REs/zero-power CSI-RS. For example, the various functions described above may be embodied in the form of a computer program stored in the storage medium 808 and executed by the controller 804. The controller 806 notes the configuration of zero-power CSI-RS and additional muted RE(s) as discussed previously. The transmission/reception unit 804 is arranged, under control of the controller 806, to receive configuration messages, send measurement reports and so forth as discussed previously.

Figure 11 is a block diagram illustrating an example of a base station 20 to which the present invention may be applied. The base station includes transmitter/receiver unit(s) 904 connected to at least one antenna 902 (together defining a communication unit) and a controller 906. The controller may be, for example, microprocessor, digital signal processor (DSP), ASIC, FPGA, or other logic circuitry programmed or otherwise configured to perform the various functions described above, such as changing an operating parameter of the base station 20. For example, the various functions described above may be embodied in the form of a computer program stored in the storage medium 908 and executed by the controller 906. Thus, for example the controller 906 is responsible for configuring the zero-power CSI-RS and additional RE(s) in co-operation with any other base stations in the co-operating group of cells, etc. The transmission/reception unit 904 is responsible for transmitting a configuration message for CSI-RS of the UE, normal PDSCH transmission including any zero-power REs, receiving a measurement report from the UE, and so on under control of the controller 906.

The embodiments may be combined as appropriate. Various modifications are possible within the scope of the present invention.Although, in the above embodiments, only one muted RE is added to the existing zero-power CSI-RS pattern, this is not essential. Two or more muted REs may be employed, for example an additional muted RE before or after the zero-power CSI-RS in Figure 6 (in the time domain sense, in other words on adjacent symbols); or an additional muted RE following (that is, on the next symbol after) the zero-power CSI-RS in Figure 8. This produces a longer muted RE sequence which allows the principle of the invention to be applied to timing differences even greater than the delays of up to 2 symbols, dealt with by the above embodiments.

The way in which at least one additional muted RE is associated with pairs of zero-power CSI-RS will in general depend on the configuration of CSI-RS which is in use, and on the extent of timing differences which need to be overcome. The CSI-RS configuration in turn depends on whether the system uses FDD or TDD, which determines the set of CSI-RS patterns available. The embodiments described above are particularly, but not exclusively, applicable to pairs of muted CSI-RS which are one symbol apart or adjacent, and in the case of relatively large timing differences (one symbol or more). Another approach, such as that taken in a co-pending application by the same applicant, may be taken when CSI-RS are adjacent and any timing differences are within one symbol, to avoid the need for additional muted REs if preferred.

For the purposes of explanation above, it has been assumed that a UE takes a measurement on a single RE. In terminals employed in a wireless communication system such as LTE, signal processing is typically FFT-based, which makes the basic unit of measurement a single RE (i.e. within one OFDM symbol). This is not essential, however, and the present invention is equally applicable if a UE is capable of finer measurement resolution in the time domain.

As already mentioned, the term "cells" in the above description is to be interpreted broadly. Cells need not each have a different geographical area, or a different base station. In general, cells can be defined on a downlink, uplink, or on both. For the purpose of embodiments, in the co-operating group of cells, the cells may be assumed to be at least downlink cells.

Reference has been made above to configuring UEs with the additional muted REs employed in embodiments of the present invention but although desirable, this is not essential. Some benefit may be gained by providing the additional muted REs, thus extending the effective length of zero-power CSI-RS, without necessarily notifying UEs of the fact.

"Muting" of REs will normally involve avoiding any transmission in the RE concerned; however, this is not necessarily always essential. It may be sufficient for some of the cells within the group merely to reduce their transmission power within the muted RE(s) to the point where OGI measurement is no longer affected by in-group interference. The term "muted" is thus to be interpreted broadly.

Moreover, reference has been made above to configuring all the cells within the co-operating group to have a common muted CSI-RS pattern. However, depending on the location and power of cells in relation to the UE for which the CSI-RS are being configured, it may not be essential for every cell in the co-operating group to mute its transmissions in the REs so configured, even in the broad sense just noted. Indeed, there may be good reasons why the network does not wish to mute all cells within the group.

To summarise, the invention provides for LATE downlink coordination of CSI-RS (Channel State Information - Reference Symbol) patterns among the several cells and/or eNodeBs operating in a coordinated group, as well as the corresponding measurement schemes on these coordinated CSI-RS patterns. This coordination enables a UE to measure the interference arising from cells outside of the co-operating group (OGI), without being disturbed by the transmissions within the group, even under the condition where the time synchronization among the cells/eNodeBs is not ideal. This intercell delay-tolerant feature is enabled by configuring an additional muted data resource element (RE) adjacent to the configured muted CSI-RSs. In effect this extends the available measurement period for OGI to three sequential REs, or more. Individual measurement can then be carried out by a terminal on these muted REs. By combining these results and possibly discarding unwanted ones, a clean measurement of out of group interference can be extracted, while maintaining tolerance to a certain degree of time difference among the cells/eNodeBs.

### Industrial Applicability

Setting up coordination of scheduling among cells or eNodeBs is a state-of-the-art performance enhancing technique for "Small Cells" and Coordinated Multi-Point (CoMP) scenarios in LTE. Within such a co-operation group, there are various techniques that can be taken to improve performance. However, one important requirement satisfied by the current invention is to enable more accurate measurement of the interference arising from out of the group, which is normally not within control of the co-operating group. Embodiments of the present invention provide a measurement technique of the OGI, which is resistant to the likely non-ideal synchronization among the cells/eNodeBs, and lead to more accurate assessment and feedback of the channel quality/data rate. Expected benefits include improving the system throughput, providing energy savings and enhancing the user experiences for mobile customers.

## Claims

1. A method for measuring out-of-group interference, OGI, in a wireless communications system providing a co-operating group of cells which coordinate their transmissions with respect to one or more terminals, transmissions in the system being scheduled in units of resource elements, REs, where the REs have defined locations in time and frequency, and in units of resource blocks, RBs each containing multiple REs, the method comprising:
configuring a terminal with locations of a plurality of REs within the same RB that it should assume to have muted transmissions from at least one of the co-operating group of cells;
for at least a predetermined pair of REs among said plurality of REs, muting transmissions from the at least one of the co-operating group of cells not only in the predetermined pair of REs, but also in at least one additional RE located adjacent to at least one of the predetermined pair of REs; and
at the said terminal, measuring OGI in one or more of the predetermined pair of, or at least one additional, REs.

2. The method according to claim 1 further comprising configuring the terminal with the location of the at least one additional RE.

3. The method according to claim 1 or 2 further comprising the terminal transmitting a measurement report based on the results of the measuring.

4. The method according to claim 3 wherein the measuring includes a plurality of measurements and the report is indicative of results of each measurement.

5. The method according to claim 3 wherein the measuring includes a plurality of measurements, the terminal analyses the measurements, and the report is indicative of a result of the analysis.

6. The method according to any preceding claim wherein the predetermined pair of REs have locations spaced apart by one or more other RE(s), and the at least one additional RE includes that one or more other RE(s).

7. The method according to any of claims 1 to 5 wherein the predetermined pair of REs have adjacent locations, and the at least one additional RE includes a RE immediately before or immediately after the adjacently-located REs.

8. The method according to claim 6 or 7 wherein the predetermined pair of, and at least one additional, REs are located at the same frequency and form a set of three or more REs consecutive in time.

9. The method according to claim 6 or 7 wherein the predetermined pair of, and at least one additional, REs are located at the same time location and form a set of three or more REs sequential in frequency.

10. The method according to any preceding claim wherein the co-operating group of cells is arranged for co-ordinated scheduling with transmissions to the terminal by one serving cell among the group.

11. The method according to any preceding claim applied to a LTE-A wireless communication system, the predetermined pair of REs constituting zero-power CSI-RS for the terminal.

12. A wireless communication system comprising:
at least one terminal; and
one or more base stations providing a co-operating group of cells which coordinate their transmissions with respect to at least one said terminal, transmissions in the system being scheduled in units of resource elements, REs, the REs having defined locations in time and frequency, and in units of resource blocks, RBs, each containing multiple REs; wherein
the one or more base stations and the said terminal are configured with locations of a plurality of REs within the same RB which are to have muted transmissions from at least one of the co-operating group of cells;
at least the one or more base stations are further configured with, for at least a predetermined pair of REs among said plurality of REs, at least one additional RE adjacent to at least one of the predetermined pair of REs and which is to be muted in addition to the predetermined pair of REs; and
the said terminal is arranged to measure OGI in one or more of the predetermined pair of, or at least one additional, REs.

13. A base station for use in a wireless communication system to provide one or more cells of a co-operating group of cells which coordinate their transmissions with respect to at least one terminal, transmissions in the system being scheduled in units of resource elements, REs, where the REs have defined locations in time and frequency, and in units of resource blocks, RBs, each containing multiple REs; wherein
the base station is configured with locations of a plurality of REs which are to have muted transmissions from at least one of the co-operating group of cells; and
the base station is further configured with, for at least a predetermined pair of REs among said plurality of REs, at least one additional RE adjacent to at least one of the predetermined pair of REs and which is to be muted in addition to the predetermined pair of REs.

14. A terminal for use in a wireless communication system comprising, in addition to the terminal, one or more base stations providing a co-operating group of cells which coordinate their transmissions with respect to the terminal, transmissions in the system being scheduled in units of resource elements, REs, where the REs have defined locations in time and frequency, and in units of resource blocks, RBs each containing multiple REs; wherein
the terminal is configured with locations of a plurality of REs which it should assume to have muted transmissions from at least one of the co-operating group of cells, and with, for at least a predetermined pair of REs among said plurality of REs, at least one additional RE adjacent to at least one of the predetermined pair of REs and which is to be muted in addition to the predetermined pair of REs; and
the terminal is arranged to measure OGI in one or more of the predetermined pair of, or at least one additional, REs.

15. Computer-readable code which, when executed by a processor of radio-transceiver-equipped information processing apparatus, provides the base station of claim 12 or 13, or the terminal of claim 14.

## Amended claims

### Amended claims in accordance with Rule 137(2) EPC.

**1.** A method for measuring out-of-group interference, OGI, in a wireless communications system providing a co-operating group of cells controlled by one or more base stations (20), which cells coordinate their transmissions with respect to one or more terminals (10), transmissions in the system being scheduled in units of resource elements, REs, where the REs have defined locations in time and frequency, and in units of resource blocks, RBs each containing multiple REs, the method comprising:
configuring, by at least one said base station (20), a terminal (10) with locations of a plurality of REs within the same RB that it should assume to have muted transmissions from at least one of the co-operating group of cells; and
muting, by at least one said base station (20), for at least a predetermined pair of REs among said plurality of REs, transmissions from the at least one of the co-operating group of cells not only in the predetermined pair of REs, but also in at least one additional RE located adjacent to at least one of the predetermined pair of REs; **characterised by**
measuring, at the said terminal (10), OGI in each of the predetermined pair of, and at least one additional, REs; and
extracting, from the results of the measuring, a measurement of OGI which is unaffected by transmissions within the co-operating group of cells even when time synchronization among the cells is not ideal.

**2.** The method according to claim 1 further comprising the terminal (10) transmitting a measurement report based on the results of the measuring.

**3.** The method according to claim 2 wherein the report is indicative of results of each measurement.

**4.** The method according to claim 2 wherein the terminal (10) analyses the measurements, and the report is indicative of a result of the analysis.

**5.** The method according to any preceding claim wherein the predetermined pair of REs have locations spaced apart by one or more other RE(s), and the at least one additional RE includes that one or more other RE(s).

**6.** The method according to any of claims 1 to 4 wherein the predetermined pair of REs have adjacent locations, and the at least one additional RE includes a RE immediately before or immediately after the adjacently-located REs.

**7.** The method according to claim 5 or 6 wherein the predetermined pair of, and at least one additional, REs are located at the same frequency and form a set of three or more REs consecutive in time.

**8.** The method according to any preceding claim wherein the co-operating group of cells is arranged for co-ordinated scheduling with transmissions to the terminal (10) by one serving cell among the group.

**9.** The method according to claim 8 further comprising comparing the results of the measuring to estimate a timing difference between the serving cell and another one of the co-operating group of cells.

**10.** The method according to any preceding claim applied to a LTE-A wireless communication system, the predetermined pair of REs constituting zero-power CSI-RS for the terminal (10).

**11.** A wireless communication system comprising:
at least one terminal (10); and
one or more base stations (20) controlling a co-operating group of cells which coordinate their transmissions with respect to at least one said terminal (10), transmissions in the system being scheduled in units of resource elements, REs, the REs having defined locations in time and frequency, and in units of resource blocks, RBs, each containing multiple REs; wherein
the one or more base stations (20) and the said terminal (10) are configured with locations of a plurality of REs within the same RB in which transmissions are muted from at least one of the co-operating group of cells, and are further configured with, for at least a predetermined pair of REs among said plurality of REs, at least one additional RE adjacent to at least one of the predetermined pair of REs and which is to be muted in addition to the predetermined pair of REs; **characterised in that**
the said terminal (10) is arranged to measure OGI in each of the predetermined pair of, and at least one additional, REs, a measurement of OGI being extracted from the measurement results which is unaffected by transmissions within the co-operating group of cells even when time synchronization among the cells is not ideal.

**12.** A base station (20) for use in a wireless communication system to control one or more cells of a co-operating group of cells which coordinate their transmissions with respect to at least one terminal (10), transmissions in the system being scheduled in units of resource elements, REs, where the REs have defined locations in time and frequency, and in units of resource blocks, RBs, each containing multiple REs; wherein
the base station (20) is configured with locations of a plurality of REs in which transmissions are muted from at least one of the co-operating group of cells; and
the base station (20) is further configured with, for at least a predetermined pair of REs among said plurality of REs, at least one additional RE adjacent to at least one of the predetermined pair of REs and which is to be muted in addition to the predetermined pair of REs; **characterised in that**
the base station (20) is arranged to receive from the terminal (10) a report of results of measurement of each of said predetermined pair of, and at least one additional, REs and extract from the results a measurement of OGI which is unaffected by transmissions within the co-operating group of cells even when time synchronization among the cells is not ideal.

**13.** A terminal (10) for use in a wireless communication system comprising, in addition to the terminal (10), one or more base stations (20) providing a co-operating group of cells which coordinate their transmissions with respect to the terminal (10), transmissions in the system being scheduled in units of resource elements, REs, where the REs have defined locations in time and frequency, and in units of resource blocks, RBs each containing multiple REs; wherein
the terminal (10) is configured with locations of a plurality of REs which it should assume to have muted transmissions from at least one of the co-operating group of cells, and with, for at least a predetermined pair of REs among said plurality of REs, at least one additional RE adjacent to at least one of the predetermined pair of REs and which is to be muted in addition to the predetermined pair of REs; **characterised in that**
the terminal (10) is arranged to measure OGI in each of the predetermined pair of, and at least one additional, REs and extract from the results a measurement of OGI which is unaffected by transmissions within the co-operating group of cells even when time synchronization among the cells is not ideal.

**14.** Computer-readable code which, when executed by a processor of radio-transceiver-equipped information processing apparatus, provides the base station (20) of claim 12, or the terminal (10) of claim 13.
